# DEMANDE DE BREVET EUROPEEN

(11) **EP 1 583 276 A1**
(43) Date de publication de la demande: **05.10.2005**
(21) Numéro de dépôt: 05290672.4
(22) Date de dépôt: 25.03.2005
(51) Int. Cl.: H04L 1/18, H04L 1/00

(54) **Dispositif et procédé perfectionnés de gestion de transmission de blocs de données dans un canal descendant de type HS-DSCH d'un réseau de communications mobile**

(30) Priorité: 31.03.2004 FR 0450631
(71) Demandeur: Evolium S.A.S., 75008 Paris (FR)
(72) Inventeur: Agin, Pacal, 92320 Chatillon (FR); Stefanini, Rémi, 75014 Paris (FR)
(74) Mandataire: El Manouni, Josiane

(57) **Abrégé**

Un dispositif (D) est dédié à la gestion de la transmission de blocs de données numériques dans un canal de transport descendant de type HS-DSCH établi entre une station de base d'un réseau de communications et un équipement d'utilisateur. Il comprend des moyens de traitement (MT) chargés, chaque fois qu'un bloc donné doit être transmis à l'équipement via le canal de transport, de choisir des valeurs successives d'un paramètre de redondance X_{RV} conformément à une séquence choisie dans laquelle la valeur de X_{RV} utilisée pour la première transmission de bloc est choisie de manière à rendre prioritaire la transmission de bits systématiques.

## Description

L'invention concerne le domaine des réseaux de communications mobile, et plus précisément la gestion de la transmission de blocs de données numériques dans les canaux de transport de type HS-DSCH de tels réseaux.

Comme le sait l'homme de l'art, il a été proposé dans la cinquième version des spécifications 3GPP, régissant la transmission de données multimédia dans les réseaux de communications mobiles (ou cellulaires), comme par example les réseaux GSM/GPRS, UMTS ou EDGE, un mécanisme d'accès à haute vitesse à des paquets descendants (ou HSDPA pour « High Speed Downlink Packet Access »). Ce mécanisme a notamment pour but de permettre un haut débit de transmission des trafics descendants de paquets, comme par exemple les trafics Internet, quasiment insensible au retard de transmission. Il repose sur l'utilisation de canaux de transport descendants à haute vitesse, appelés HS-DSCH (pour « High Speed - Downlink Shared Channel ») et partagés par plusieurs équipements d'utilisateurs.

Il est rappelé qu'un canal de transport HS-DSCH est situé entre la couche MAC et la couche physique. Il est également rappelé que les bits de données provenant du canal de transport HS-DSCH sont transmis à un équipement d'utilisateur dans un ensemble d'au moins un canal physique, appelé HS-PDSCH et se situant au niveau de la couche physique.

On entend ici par « équipement d'utilisateur » tout terminal de communication capable d'échanger des données par voie d'ondes avec un réseau de communications mobile (ou cellulaire).

L'obtention de hauts débits repose notamment sur la mise en oeuvre d'une technique hybride automatisée de répétition de requêtes, connue sous l'acronyme anglais HARQ (pour « Hybrid Automatic Repeat reQuest »). Cette technique consiste, chaque fois qu'un équipement d'utilisateur reçoit, de la station de base dont il dépend, sur un canal de transport HS-DSCH, un bloc de données incorrect, à transmettre à cette station de base un message de mauvaise réception, appelé « NACK » (abréviation anglaise de « Non Acknowledgment »), de sorte qu'elle lui retransmette un nouveau bloc de données dans le canal de transport HS-DSCH. A réception de ce nouveau bloc, l'équipement d'utilisateur recombine les données qu'il contient à celles contenues dans le(s) bloc(s) précédemment reçu(s) de façon incorrecte, qu'il avait temporairement stockées dans une mémoire tampon dédiée.

Il existe deux modes de retransmission, l'un appelé « combinaison de poursuite » (ou en anglais CC pour « Chase Combining »), l'autre appelé « redondance incrémentale » (ou en anglais IR pour « Incremental Redundancy »). Le mode CC consiste à retransmettre chaque fois un bloc contenant le même jeu de données que le jeu du bloc initial, tandis que le mode IR consiste à retransmettre des blocs contenant des jeux de données qui diffèrent tous partiellement les uns des autres. Dans ce dernier mode (IR), chaque jeu de données est choisi en fonction de la valeur d'un paramètre de redondance, appelé X_{RV}, qui varie d'un bloc à l'autre et qui est utilisée dans une étape d'organisation de débit (ou « rate-matching step »).

Comme le sait l'homme de l'art, le mode de gestion IR s'avère être plus efficace que le mode de gestion CC, si bien qu'il est particulièrement important de choisir de façon optimisée les valeurs du paramètre de redondance X_{RV}.

L'invention a pour objet d'optimiser le choix pour une station de base de la valeur du paramètre de redondance X_{RV}, utilisé dans l'étape d'organisation de débit pour définir le jeu de données de chaque bloc à transmettre.

Elle propose à cet effet un dispositif de gestion de transmission de blocs de données numériques (de type dit « systématique » et/ou de type dit « à parité 1 ou 2 ») dans un canal de transport descendant de type HS-DSCH, établi entre une station de base d'un réseau de communications mobile et au moins un équipement d'utilisateur, pour un système de codage de canal de transport.

Ce dispositif comprend des moyens de traitement chargés, d'une part, de choisir la valeur du paramètre de redondance X_{RV} (défini par exemple par au moins une première s et une deuxième r variables selon la norme UMTS en cours) en vue de la transmission à l'équipement utilisateur d'un bloc comportant un premier jeu de données numériques choisi en fonction de cette valeur de X_{RV}, et d'autre part, chaque fois que l'équipement d'utilisateur n'a pas reçu correctement un bloc, de choisir au moins une autre valeur de X_{RV}, en vue de la transmission à l'équipement d'au moins un autre bloc comportant un autre jeu de données numériques choisi en fonction de cette autre valeur de X_{RV}.

Selon l'invention, les moyens de traitement sont en outre chargés, chaque fois qu'un bloc donné doit être transmis sur le canal HS-DSCH, de choisir des valeurs successives de paramètre de redondance X_{RV} conformément à une séquence choisie dans laquelle la valeur de X_{RV} utilisée pour la première transmission de bloc est choisie de manière à rendre prioritaire la transmission de bits systématiques.

Préférentiellement, les moyens de traitement sont également agencés pour choisir les valeurs successives de paramètre de redondance X_{RV} conformément à une séquence choisie dans laquelle la valeur du paramètre de redondance X_{RV} utilisée pour chaque transmission de bloc postérieure à la première transmission est choisie de manière à rendre prioritaire alternativement la transmission de bits de parité 1 ou 2 et la transmission de bits systématiques.

Par ailleurs, les moyens de traitement peuvent être agencés, en variante ou en complément, pour choisir les valeurs successives de paramètre de redondance X_{RV} conformément à une séquence choisie dans laquelle chaque valeur du paramètre de redondance X_{RV} est choisie de manière à permettre une alternance de mise en correspondance bits/symboles lors de chaque transmission.

L'invention peut s'appliquer aussi bien aux transmissions utilisant une modulation de type « QPSK », dans laquelle X_{RV} est par exemple définie selon la norme UMTS en cours par les première s et deuxième r variables (la variable s pouvant alors prendre deux valeurs choisies parmi 0 et 1 et la variable r pouvant prendre au moins deux valeurs choisies parmi 0, 1, 2 et 3), qu'aux transmissions utilisant une modulation de type « 16QAM », dans laquelle X_{RV} est par exemple définie selon la norme UMTS en cours par les première s et deuxième r variables et par une troisième variable (par exemple b), la première variable s pouvant alors prendre deux valeurs choisies parmi 0 et 1, la deuxième variable r pouvant prendre au moins deux valeurs choisies parmi 0 et 1, et la troisième variable étant destinée à définir une mise en correspondance bits/symboles (lorsqu'il s'agit de la variable b, celle-ci prend généralement au moins deux valeurs choisies parmi 0, 1, 2 et 3).

En présence d'une modulation QPSK, les moyens de traitement peuvent être agencés de manière à choisir chaque séquence de sorte qu'elle constitue une suite de valeurs de X_{RV} dans laquelle la première valeur, correspondant à la première transmission, est paire. Préférentiellement, cette suite comporte une alternance de valeurs de X_{RV} paire et impaire, la première valeur correspondant à la première transmission étant paire.

Par exemple, dans le cas de la norme UMTS et lorsque X_{RV} ne dépend que des paramètres r et s, X_{RV} peut être défini par la relation X_{RV} = 2r +1 ― s.

Par ailleurs, les moyens de traitement peuvent être agencés de manière à choisir chaque séquence de sorte qu'elle constitue une suite alternée de valeur de X_{RV} paire, correspondant à une variable s égale à 1, et de valeur de X_{RV} impaire, correspondant à une variable s égale à 0.

En outre, les moyens de traitement peuvent être agencés de manière à choisir chaque séquence de sorte qu'elle constitue une suite de valeurs de X_{RV} dans laquelle la valeur de la variable r varie à chaque valeur de X_{RV} ou bien toutes les deux valeurs de X_{RV}.

Par exemple, les moyens de traitement peuvent être agencés pour constituer chaque séquence sous la forme d'une suite de valeurs de redondance X_{RV} choisie parmi au moins une fraction des suites {0,1,2,3,4,5,6,7}, {0,1,2,3} et {2,1,0,3,4}, contenant par exemple au moins leurs quatre premières valeurs. Les valeurs 0, 1, 2, 3, 4, 5, 6 et 7 correspondent ici respectivement aux couples (s,r) de valeurs (1,0), (0,0), (1,1), (0,1), (1,2), (0,2), (1,3) et (0,3).

En présence d'une modulation 16QAM, les moyens de traitement peuvent être agencés de manière à choisir chaque séquence de sorte qu'elle constitue une suite de valeurs de X_{RV} dans laquelle la valeur de la deuxième variable r varie à chaque valeur de X_{RV} ou bien toutes les deux valeurs de X_{RV}, par exemple au moins lors des deux, trois ou quatre premières transmissions. En variante ou en complément, les moyens de traitement peuvent être agencés de manière à choisir chaque séquence de sorte qu'elle constitue une suite de valeurs de X_{RV} dans laquelle la valeur de la troisième variable b varie à chaque valeur de X_{RV} ou bien toutes les deux valeurs de X_{RV}, par exemple au moins lors des deux, trois ou quatre premières transmissions. Egalement en variante ou en complément, les moyens de traitement peuvent être agencés de manière à choisir chaque séquence de sorte qu'elle constitue une suite de valeurs de X_{RV} dans laquelle les valeurs des deuxième r et troisième variables varient simultanément ou bien de façon alternée, par exemple au moins lors des deux, trois ou quatre premières transmissions.

Dans ce cas, les moyens de traitement peuvent être par exemple agencés pour constituer chaque séquence sous la forme d'une suite de valeurs de redondance X_{RV} choisie parmi au moins une fraction des suites {0,3,5,1,2}, {0,3,5,1,4}, {0,3,5,1,6}, {0,3,5,1,7}, {0,3,6,1,2}, {0,3,6,1,4}, {0,3,6,1,5}, {0,3,6,1,7}, {6,3,7,1,0}, {6,3,7,1,2}, {6,3,7,1,4} et {6,3,7,1,5}. Les valeurs 0, 1, 2, 3, 4, 5, 6 et 7 correspondent ici respectivement aux triplets de première, deuxième et troisième variables (s,r,b) de valeurs (1,0,0), (0,0,0), (1,1,1), (0,1,1), (1,0,1), (1,0,2), (1,0,3) et (1,1,0).

Par ailleurs, les moyens de traitement sont préférentiellement agencés de manière à choisir chaque séquence de sorte qu'elle constitue une suite alternée de valeurs de paramètre de redondance X_{RV} dans laquelle la première variable s est soit égale à 1, soit égale à 0.

Quel que soit le type de modulation utilisé, les moyens de traitement peuvent être agencés de manière à utiliser de façon cyclique la séquence choisie.

L'invention propose également, d'une première part, une station de base, pour un réseau de communications mobile, équipée d'un dispositif de gestion du type de celui présenté ci-avant, d'une deuxième part, un système d'organisation de débit, pour un système de codage de canal de transport d'une station de base d'un réseau de communications mobile, équipé d'un dispositif de gestion du type de celui présenté ci-avant, et d'une troisième part, un système de codage de canal de transport, pour une station de base d'un réseau de communications mobile, équipé d'un dispositif de gestion du type de celui présenté ci-avant.

L'invention propose en outre un contrôleur de réseau radio (ou RNC) pour un réseau de communications mobile, comprenant au moins un dispositif de gestion du type de celui présenté ci-avant de manière à fournir à au moins une station de base du réseau des séquences de valeurs de paramètre de redondance X_{RV}.

L'invention est particulièrement bien adaptée, bien que de façon non exclusive, au domaine des communications radio 3GPP, et notamment aux réseaux de type W-CDMA, CDMA 2000, IS95, UMTS, GSM/GPRS et EDGE.

D'autres caractéristiques et avantages de l'invention apparaîtront à l'examen de la description détaillée ci-après, et des dessins annexés, sur lesquels :
- la figure 1 illustre de façon schématique un exemple de réalisation d'une partie d'un réseau de communications de type UMTS comprenant des stations de base (Node Bs) munies d'un dispositif de traitement selon l'invention,
- la figure 2 illustre de façon schématique et fonctionnelle un exemple de réalisation d'un système de codage de canal de transport, équipé d'un dispositif de traitement selon l'invention,
- la figure 3 illustre de façon schématique et fonctionnelle un exemple de réalisation d'un turbo-codeur pour le système de codage de canal de transport de la figure 2,
- la figure 4 illustre de façon schématique et fonctionnelle un exemple de réalisation d'un système d'organisation de débit pour le système de codage de canal de transport de la figure 2, et
- la figure 5 illustre de façon schématique un exemple de procédure de gestion cyclique au moyen de quatre valeurs différentes de paramètre de redondance X_{RV}, constituant une séquence.

Les dessins annexés pourront non seulement servir à compléter l'invention, mais aussi contribuer à sa définition, le cas échéant.

L'invention a pour objet de permettre l'optimisation du choix de la valeur du paramètre de redondance X_{RV} dans une station de base d'un réseau de communications mobile.

L'invention concerne tout type de réseau de communications mobile dans lequel des liaisons descendantes de type HS-DSCH, associées à un ensemble d'un ou plusieurs canaux physiques de type HS-PDSCH et telles que définies dans la version 5 des spécifications 3GPP (accessibles sur le site du 3GPP à l'adresse http://www.3GPP.org), peuvent être établies entre une station de base et au moins un équipement d'utilisateur. Elle s'applique par conséquent aux communications radio (ou mobiles) 3GPP, et notamment aux réseaux de type W-CDMA, CDMA 2000, IS95, UMTS, GSM/GPRS et EDGE. Dans ce qui suit, on considère à titre d'exemple que le réseau est de type UMTS.

Par ailleurs, on entend par « équipement d'utilisateur » tout terminal de communication capable d'échanger des données par voie d'ondes, sous la forme de signaux, avec un autre équipement d'utilisateur ou un équipement de son réseau de rattachement, comme par exemple une station de base. Il pourra donc s'agir, par exemple, d'un téléphone portable, ou d'un assistant personnel numérique (ou PDA) ou d'un ordinateur portable équipé d'un dispositif de communication radio.

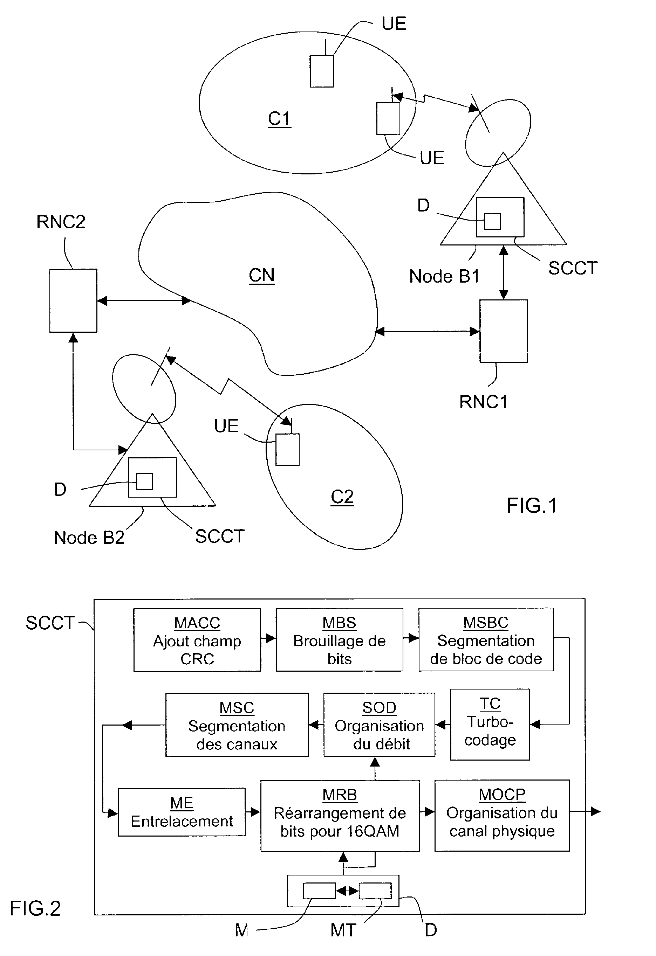

On se réfère tout d'abord à la figure 1 pour décrire un réseau de communications mobile (ici de type UMTS) permettant de mettre en oeuvre l'invention.

Un réseau UMTS peut, d'une façon très schématique mais néanmoins suffisante à la compréhension de l'invention, être résumé à un coeur de réseau (ou « Core Network » (CN)) couplé à un réseau d'accès radio comportant une ou plusieurs stations de base appelées Node Bs et raccordées au Core Network CN par un ou plusieurs noeuds RNC (ou « Radio Network Controller »). Dans l'exemple illustré, le réseau UMTS comprend deux stations de base Node B1 et Node B2 respectivement raccordées au Core Network CN par des noeuds RNC1 et RNC2. Par ailleurs, dans cet exemple chaque station de base Node B1, Node B2 est associée à une unique cellule C1, C2 couvrant une zone radio dans laquelle peuvent se trouver un ou plusieurs équipements d'utilisateurs UE.

Chaque Node Bi (ici i=1, 2) est chargé du traitement du signal et, notamment, de la gestion des demandes d'accès au réseau UMTS effectuées par les équipements d'utilisateurs UE qui sont situés dans la cellule Ci qu'il contrôle, ainsi que de la gestion des canaux de transport de type HS-DSCH qu'il a établis avec des équipements d'utilisateurs UE qui sont situés dans sa cellule Ci.

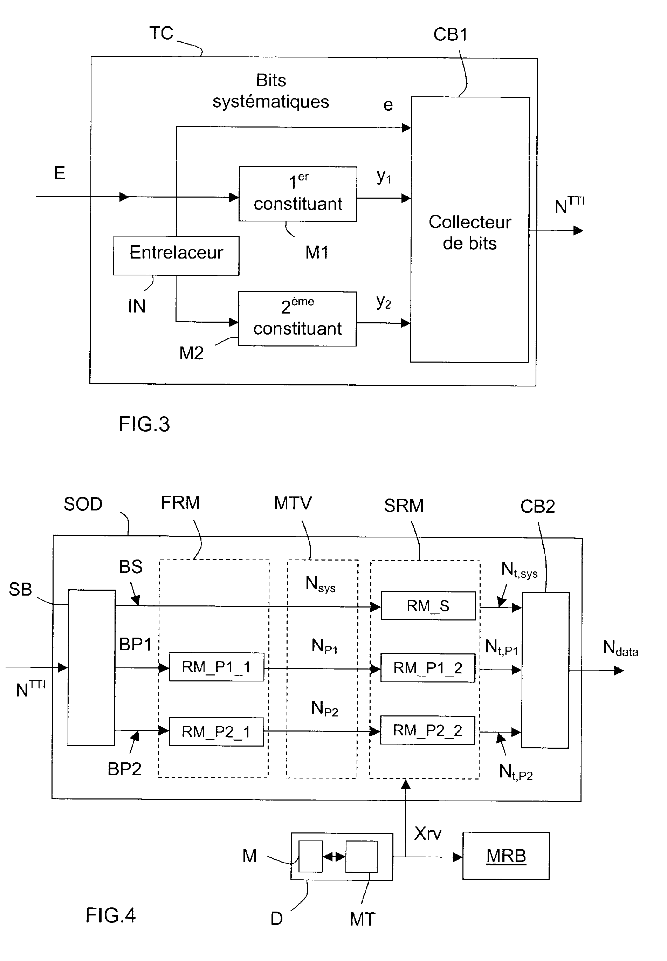

Afin de gérer les canaux de transport HS-DSCH, chaque Node Bi comprend un système de codage de canal de transport SCCT, du type de celui illustré schématiquement, et à titre d'exemple, sur la figure 2. Un tel système SCCT étant bien connu de l'homme de l'art et ne faisant pas l'objet principal de l'invention, il ne sera donc pas décrit ici en détail. Il est simplement rappelé qu'il est généralement constitué :
- d'un module MACC d'ajout de champ de contrôle de redondance cyclique (ou CRC pour « Cyclic Redundancy Check »), chargé d'adjoindre aux données délivrées par le module de concaténation CC un champ CRC utilisé par l'équipement d'utilisateur UE, destinataire des données, pour qu'il puisse détecter des erreurs de transmission de données,
- d'un module MBS de brouillage de bits (ou « bit scrambling ») chargé de rendre les bits de données délivrés par le module MACC pseudo aléatoires, afin d'atteindre les meilleures performances dans le module de turbo codage (TC), performances qui pourraient être dégradées pour certaines séquences de bits particulières,
- d'un module de segmentation de blocs de code MSBC chargé de segmenter les blocs de données délivrés par le module MBS en blocs plus petits, de manière à délivrer des blocs de taille inférieure à la taille maximale supportée par le codeur de canal, laquelle est définie par la norme 3GPP TS 25.212,
- d'un module de turbo-codage (ou turbo-codeur) TC, du type de celui illustré sur la figure 3, chargé de coder les bits de données délivrés par le module de segmentation de blocs de code MSBC, afin de délivrer des flux de bits codés N^{TTI} de types dits « systématique », « de parité 1 » et « de parité 2 », ci-après appelés bits d'entrée, et comprenant à cet effet :
   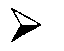 une entrée E alimentée en bits de données non codés,
   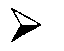 un premier module de codage M1 alimenté en bits non codés provenant directement de l'entrée E et délivrant des bits codés de parité 1 (y₁),
   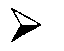 un second module de codage M2 alimenté en bits non codés provenant de l'entrée E via un entrelaceur (ou « interleaver ») IN et délivrant des bits codés de parité 2 (y₂),
   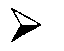 un module de collection de bits alimenté, d'une première part, en bits non codés de type systématique (e) provenant directement de l'entrée E, d'une deuxième part, en bits codés de parité 1 (y₁) provenant du premier module M1, et d'une troisième part, en bits codés de parité 2 (y₂) provenant du second module M2, et délivrant des flux de bits codés N^{TTI}, et
   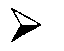 une sortie S1 délivrant les trois différents flux de bits codés N^{TTI},
- d'un système d'organisation de débit SOD chargé d'organiser les débits respectifs des différents types de bits d'entrée (systématiques et de parité 1 et 2) délivrés par le turbo-codeur TC, et de délivrer des bits dits « de sortie », et sur lequel on reviendra plus loin en référence à la figure 4,
- d'un module de segmentation de canaux physiques MSC chargé de segmenter (ou séparer) les bits de sortie délivrés par le système d'organisation de débit SOD et transportés par le canal de transport HS-DSCH, de sorte qu'ils puissent être répartis dans les différents canaux physiques HS-PDSCH qu'ils doivent emprunter,
- un module d'entrelacement ME chargé d'entrelacer les bits délivrés par le module de segmentation de canaux physiques MSC, en les mélangeant, de manière à améliorer les performances du codage correcteur d'erreur (TC) vis à vis du canal radio,
- éventuellement d'un module de réarrangement de bits MRB, chargé de réarranger les bits de données délivrés par le module d'entrelacement ME, lorsque la modulation est de type 16QAM, et
- d'un module d'organisation de canaux physiques MOCP chargé d'alimenter le ou les canaux physiques HS-PDSCH avec les bits délivrés par le module d'entrelacement ME ou le module de réarrangement de bits MRB.

Il est rappelé que le nombre de bits de sortie maximal pouvant être transmis dans les N (N>0) canaux physiques HS-PDSCH, associés à un canal de transport HS-DSCH, pendant un intervalle de temps donné (ou TTI pour « Time Transmission Interval »), varie en fonction du type de modulation choisi. Dans le cas d'une modulation de type QPSK, le nombre de bits maximal est égal à N × 960, tandis que dans le cas d'une modulation de type 16QAM, il est égal à N × 1920, pour chaque intervalle de transmission temporel ou TTI constitué de trois tranches (ou « slots ») d'une durée totale de 2 ms (ce qui correspond à un bloc transmis toutes les 2 ms). N représente ici le nombre de canaux physiques HS-PDSCH, et donc de codes (un code par canal physique), utilisés pour le transport des blocs de bits de données d'un canal de transport HS-DSCH. C'est le module d'organisation de canaux physiques MOCP qui est chargé de constituer des blocs de données numériques qui remplissent au mieux les N canaux physiques HS-PDSCH, associés au canal de transport HS-DSCH, compte tenu de l'organisation de débit effectuée par le système d'organisation de débit SOD.

Le système d'organisation de débit SOD est chargé du choix des bits de données qui doivent être retransmis de façon prioritaire dans le ou les N canaux physiques HS-PDSCH, associés à un canal de transport HS-DSCH, par un Node B, sous la forme d'un bloc, à un équipement d'utilisateur UE qui lui a signalé par un message de type NACK qu'il n'a pas reçu correctement un premier bloc (précédent), conformément à la technique hybride automatisée de répétition de requêtes, connue sous l'acronyme anglais HARQ (pour « Hybrid Automatic Repeat reQuest »).

On va maintenant décrire en détail le procédé d'organisation de débit selon l'invention, en référence à la figure 4.

Comme indiqué dans la partie introductive, l'invention concerne l'organisation de débits de bits en mode de redondance incrémentale (ou IR), dans lequel le jeu de bits de données que comporte un bloc, qui est retransmis consécutivement à une réception incorrecte d'un premier bloc, diffère au moins en partie du jeu de bits de données du bloc qui le précède. Le but est en effet d'utiliser lors de chaque nouvelle retransmission d'autres bits que ceux précédemment transmis. Cela permet soit de transmettre les bits supprimés lors de la première transmission, soit d'améliorer la protection d'autres bits en cas de répétition de bits lors de la première transmission. Le décodage d'un bloc au niveau de l'équipement d'utilisateur UE destinataire s'effectue par combinaison des contenus de ses différentes versions, transmises successivement par le Node B auquel il est momentanément rattaché et stockées temporairement dans une mémoire tampon.

Comme évoqué précédemment, le choix des bits à transmettre, tant lors d'une première transmission que lors des retransmissions suivantes dans le cadre de la procédure HARQ, est effectué par le système d'organisation de débit SOD en fonction de la valeur d'un paramètre de redondance appelé X_{RV}. La performance globale du procédé d'organisation de débit en mode de redondance incrémentale (ou IR) dépend principalement des valeurs successives de X_{RV}, utilisées pour chaque (re)transmission.

Ce paramètre X_{RV} désigne, en fonction de sa valeur, le type de bits (systématique ou de parité 1 ou 2) qui doit être transmis en priorité et donc les bits que l'on peut prioritairement supprimer ou répéter.

Le système d'organisation de débit SOD comporte tout d'abord, comme illustré sur la figure 4, un module de séparation de bits SB alimenté en flux de bits codés N^{TTI} par le turbo-codeur TC et chargé de séparer les différents types de bits (systématiques (BS), bits de parité 1 (BP1) et bits de parité 2 (BP2)) afin qu'ils soient traités séparément par un premier étage d'organisation de débit FRM.

Le premier étage d'organisation de débit FRM est chargé d'adapter le nombre de bits d'entrée N^{TTI}, délivrés par le turbo-codeur TC, au nombre de bits dits « intermédiaires » que peut contenir une mémoire virtuelle d'incrément de redondance (ou « virtual IR buffer ») MTV.

A cet effet, le premier étage d'organisation de débit FRM comporte deux modules d'organisation RM_P1_1 et RM_P2_1 chargés respectivement de traiter les bits de parité 1 BP1 et les bits de parité 2 BP2 afin de délivrer sur leurs sorties des flux de bits de parité 1 Nₚ₁ et de bits de parité 2 Nₚ₂.

Le nombre de bits d'entrée N^{TTI} étant généralement supérieur au nombre de bits intermédiaires que peut contenir la mémoire virtuelle MTV, les modules d'organisation RM_P1_1 et RM_P2_1 sont chargés de supprimer (ou « puncture ») une partie d'entre eux. Cette technique de suppression de bits (ou « puncturing ») est définie par la norme 3GPP TS 25.212, version 5.3.0.

Les bits systématiques ne font pas l'objet d'un traitement par suppression au sein du premier étage d'organisation de débit FRM, mais sont directement délivrés sur une troisième sortie, sous la forme de flux de bits systématiques N_{sys}.

Les trois flux Nsys, N_{P1} et N_{P2} alimentent la mémoire tampon virtuelle MTV. La taille de cette mémoire MTV dépend du nombre de bits (intermédiaires) qui doivent être conservés dans le Node B tant que l'équipement d'utilisateur UE destinataire n'a pas reçu correctement un premier bloc et donc tant qu'il n'a pas adressé audit Node B un message d'accusé de réception ACK, conformément à la technique HARQ.

Le système d'organisation de débit SOD comporte également un second étage d'organisation de débit SRM chargé de définir pour chaque retransmission le débit prioritaire de chaque type de flux en fonction de la valeur d'un paramètre de redondance appelé X_{RV} et d'adapter le nombre de bits intermédiaires, stockés dans la mémoire virtuelle MTV, au nombre maximal de bits dits « de sortie » qui peuvent être transmis par l'ensemble des N canaux physiques HS-PDSCH associés à un canal de transport HS-DSCH, pendant un intervalle de temps donné (TTI).

Il comprend à cet effet trois modules d'organisation RM_S, RM_P1_2 et RM_P2_2 chargés de traiter respectivement les bits systématiques N_{sys}, les bits de parité 1 N_{P1} et les bits de parité 2 N_{P2} afin de délivrer sur leurs sorties des flux de bits systématiques N_{t,sys}, de bits de parité 1 N_{t,P1} et de bits de parité 2 N_{t,P2} qui alimentent un collecteur de bits CB2 délivrant sur une sortie un flux de bits de sortie N_{data}, regroupant les différents flux sélectionnés et alimentant le module de segmentation de canaux physiques MSC.

Selon le nombre maximal de bits de sortie qui peuvent être transmis par l'ensemble des N canaux physiques HS-PDSCH associés à un canal de transport HS-DSCH, dans un intervalle de temps donné (TTI), les modules d'organisation RM_S, RM_P1_2 et RM_P2_2 effectuent soit une nouvelle suppression (ou puncturing) de bits intermédiaires, soit un ajout de bits, par répétition.

Chaque fois que le Node B reçoit un message NACK d'un équipement d'utilisateur UE, le second étage d'organisation de débit SRM, de son système d'organisation de débit SOD, détermine un jeu de bits de sortie, pour le bloc à retransmettre, à partir des bits intermédiaires stockés dans la mémoire MTV. Ce jeu est alors identique à celui précédemment (re)transmis, en présence d'un mode de transmission CC, ou différent de celui précédemment (re)transmis, en présence d'un mode de transmission IR.

Le dispositif de gestion D, selon l'invention, est chargé de choisir chaque valeur de paramètre X_{RV} utilisée par le second étage d'organisation de débit SRM du système d'organisation de débit SOD, ainsi qu'éventuellement par le module MRB du système de codage de canal de transport SCCT lorsque la modulation est de type 16QAM.

Il peut faire partie intégrante du système de codage de canal de transport SCCT et être couplé à son système d'organisation de débit SOD ainsi qu'à son module de réarrangement de bits MRB, ou bien être externe au système de codage de canal de transport SCCT (par exemple implanté dans une station de base) et être couplé au système d'organisation de débit SOD ainsi qu'au module de réarrangement de bits MRB. Lorsque la modulation est de type QPSK, le dispositif de gestion D peut également faire partie intégrante du système d'organisation de débit SOD puisqu'il ne sert qu'à celui-ci. Il peut également faire partie d'un contrôleur de réseau radio (RNC) couplé à une ou plusieurs stations de base.

Le dispositif de gestion D comporte plus précisément un module de traitement MT chargé de choisir chaque valeur du paramètre de redondance X_{RV} devant être utilisée par le système d'organisation de débit SOD, ainsi qu'éventuellement par le module de réarrangement de bits MRB.

Dans la norme UMTS en cours, ce paramètre de redondance X_{RV} est défini par au moins une première variable, appelée s, et une deuxième variable, appelée r.

Plus précisément, dans la norme UMTS en cours, lorsque la transmission s'effectue dans le canal HS-DSCH au moyen d'une modulation de type QPSK, X_{RV} est défini par les première s et deuxième r variables. Dans ce cas, la variable s prend généralement les valeurs 0 et 1, tandis que la variable r prend soit les valeurs 0 et 1, soit les valeurs 0, 1 et 2, soit encore les valeurs 0, 1, 2 et 3.

Par ailleurs, dans la norme UMTS en cours, lorsque la transmission s'effectue dans le canal HS-DSCH au moyen d'une modulation de type 16QAM, X_{RV} est défini par les première s et deuxième r variables et par une troisième variable b, appelée « version de constellation ». Dans ce cas, la variable s prend généralement les valeurs 0 et 1, la variable r prend généralement les valeurs 0 et 1, et la variable r prend soit les valeurs 0 et 1, soit les valeurs 0, 1 et 2, soit encore, et plus généralement, les valeurs 0, 1, 2 et 3. Les trois variables r, s et b servent à la définition du paramètre X_{RV}. La variable b sert plus particulièrement à indiquer au module de réarrangement de bits MRB, du système de codage de canal de transport SCCT, comment il doit effectuer la mise en correspondance bits-symboles.

Selon l'invention, le module de traitement MT est chargé, chaque fois qu'un bloc donné doit être transmis sur le canal HS-DSCH, de choisir des valeurs successives de paramètre de redondance X_{RV} conformément à une séquence choisie.

Au sein de chaque séquence, la valeur de X_{RV} qui est utilisée pour la première transmission d'un bloc est choisie de sorte qu'elle rende prioritaire la transmission de bits systématiques.

Préférentiellement, la valeur de X_{RV} utilisée pour chaque (re)transmission de bloc, postérieure à la première transmission, est choisie de sorte qu'elle rende prioritaire la transmission alternée de bits de parité 1 ou 2 et de bits systématiques. En d'autres termes, il est préférable d'alterner d'une transmission à l'autre les priorités des bits systématiques et des bits de parité 1 ou 2, sachant que les bits systématiques sont prioritaires lors de la première transmission.

C'est la variable s qui conditionne la priorité. Plus précisément, lorsque s est égale à 1, on transmet prioritairement des bits systématiques, tandis que l'on transmet prioritairement des bits de parité 1 ou 2 lorsque s est égale à 0.

La variable r est chargée de faire varier les diagrammes de répétition ou de suppression utilisés par les trois modules d'organisation RM_S, RM_P1_2 et RM_P2_2 du second étage d'organisation de débit SRM pour déterminer les débits de flux des trois types de bits.

Par ailleurs, le module de traitement MT peut être agencé pour choisir les valeurs successives de paramètre de redondance X_{RV} conformément à une séquence choisie dans laquelle chaque valeur du paramètre de redondance X_{RV} est choisie de manière à permettre une alternance de mise en correspondance bits/symboles lors de chaque transmission.

On peut définir des séquences de plus ou moins grande taille. Par exemple, une séquence peut comporter une suite de deux, trois, quatre, cinq, six, ou sept valeurs de X_{RV}, voire plus.

A titre d'exemple, une séquence peut être constituée de la suite de valeurs {0,1,2,3,4,5,6,7}, ou bien de la suite de valeurs {0,1,2,3,4}.

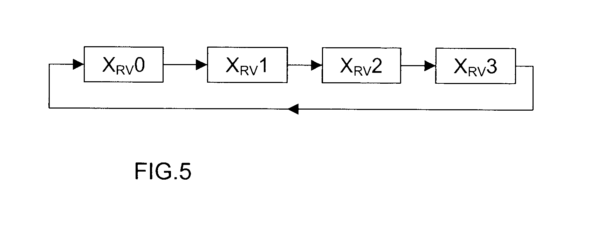

Mais, il est également possible de configurer le module de traitement MT de sorte qu'il répète de façon cyclique une séquence initialement prévue pour plusieurs transmissions, par exemple quatre (une première transmission avec priorité aux bits systématiques et trois retransmissions avec priorités alternées entre les bits de parité 1 ou 2 et les bits systématiques), lorsque plus de quatre transmissions sont nécessaires. Une telle situation est illustrée sur la figure 5. Plus précisément, dans cet exemple le module de traitement MT utilise en boucle une séquence constituée de la suite de valeurs {X_{RV}0, X_{RV}1, X_{RV}2, X_{RV}3}. Lorsque la dernière valeur (X_{RV}3) de la séquence a été utilisée pour la quatrième transmission, on utilise de nouveau la première valeur (X_{RV}0) de la séquence pour la cinquième transmission, puis la deuxième valeur (X_{RV}1), puis la troisième valeur (X_{RV}2), puis la quatrième valeur (X_{RV}3), puis de nouveau la première valeur (X_{RV}0), et ainsi de suite, si cela s'avère nécessaire.

En d'autres termes, si un bloc doit être transmis une n-ième fois, la valeur de X_{RV} utilisée est définie par la relation : X_{RV} = T[(n-1) modulo L], où T désigne la valeur X_{RV}(n) de la séquence choisie et L est la longueur de la séquence (c'est-à-dire le nombre de valeurs qu'elle contient, lequel est supérieur ou égal à deux dans le mode IR, ou égal à 1 dans le mode CC où on retransmet toujours la même séquence de bits avec la même valeur de X_{RV}).

En pratique, il est préférable d'utiliser un maximum de valeurs de X_{RV} différentes.

En présence d'une modulation QPSK, le module de traitement MT peut choisir chaque séquence de sorte qu'elle constitue une suite alternée de valeurs de X_{RV} paire et impaire, la première valeur correspondant à la première transmission étant paire. Il est en effet possible, dans la norme UMTS actuelle, de définir le paramètre X_{RV} au moyen d'une relation telle que : X_{RV} = 2r +1 - s.

Avec une telle relation, chaque fois que la variable s est égale à 1, X_{RV} est paire, tandis que chaque fois que la variable s est égale à 0, X_{RV} est impaire. Par conséquent, chaque fois que X_{RV} est paire on donne la priorité aux bits systématiques, tandis que chaque fois que X_{RV} est impaire on donne la priorité aux bits de parité 1 ou 2.

Le module de traitement MT peut également choisir chaque séquence de sorte qu'elle constitue une suite alternée de valeurs de X_{RV} dans laquelle la valeur de la variable r varie à chaque alternance ou bien toutes les deux valeurs de X_{RV}.

Par exemple, au sein d'une séquence r peut varier comme suit 0,1,2,3,0,1,2,3,0,..., ou comme suit 0,0,1,1,2,2,3,3,0,0,1,1,..., ou encore comme suit 2,2,1,1,2,2,1,1,2,2,...

Un exemple de combinaisons de valeurs des variables s et r, aboutissant à différentes valeurs de X_{RV}, est donné dans le tableau ci-dessous. Il correspond à une situation dans laquelle la valeur de r change toutes les deux valeurs de X_{RV}.

| X_{RV} | s | r |
|---|---|---|
| 0 | 1 | 0 |
| 1 | 0 | 0 |
| 2 | 1 | 1 |
| 3 | 0 | 1 |
| 4 | 1 | 2 |
| 5 | 0 | 2 |
| 6 | 1 | 3 |
| 7 | 0 | 3 |

Il est important de noter qu'utiliser une alternance de valeurs de X_{RV} paire et impaire est équivalent à alterner la priorité sur les bits systématiques et les bits de parité 1 ou 2. Cela équivaut également à dire que s doit être égal à 1 lors de la première transmission, puis à une alternance de 0 et de 1 pour les retransmissions suivantes, et que dans le même temps r doit varier lors de chaque (re)transmission ou toutes les deux (re)transmissions.

Il est également important de noter que les valeurs de X_{RV} ne croissent pas forcément avec leur position au sein de leur séquence. Ce qui est important c'est que l'ordonnancement des valeurs de X_{RV} corresponde à une alternance de valeurs de s égales à 1 et 0. Par exemple, une séquence peut être définie par la suite de valeurs croissantes {0,1,2,3,4,5,6,7}, mais elle peut également être définie par la suite de valeurs désordonnées {2,5,6,1,0,3,4,7}. Dans ces différents exemples purement illustratifs, les valeurs de X_{RV} des séquences correspondent aux couples de valeurs (s,r) définis dans le tableau précédent.

En présence d'une modulation 16QAM, le module de traitement MT peut par exemple choisir chaque séquence de sorte qu'elle constitue une suite de valeurs de X_{RV} dans laquelle la valeur de la variable r varie à chaque valeur de X_{RV} ou bien toutes les deux valeurs de X_{RV}, par exemple lors des quatre premières transmissions au moins (mais cela n'est pas une obligation).

En variante ou en complément, le module de traitement MT peut par exemple choisir chaque séquence de sorte qu'elle constitue une suite de valeurs de X_{RV} dans laquelle la valeur de la variable b varie à chaque valeur de X_{RV} ou bien toutes les deux valeurs de X_{RV}, par exemple lors des quatre premières transmissions au moins (mais cela n'est pas une obligation).

Il est en effet préférable de faire varier r, si possible lors de chaque transmission et, si cela s'avère également possible, de faire varier b, de préférence lors de chaque transmission. En d'autres termes, il est possible de faire varier r et b soit simultanément, par exemple lors de chaque transmission, soit de façon alternée, par exemple toutes les deux transmissions.

Par ailleurs, comme dans le cas de la modulation de type QPSK, le module de traitement MT est ici préférentiellement agencé de manière à choisir chaque séquence de sorte qu'elle constitue une suite alternée de valeurs de paramètre de redondance X_{RV} dans laquelle la variable s est soit égale à 1, soit égale à 0.

Un exemple de combinaisons de valeurs des variables s, r et b, aboutissant à différentes valeurs de X_{RV}, est donné dans le tableau ci-dessous dans le cas de la norme UMTS actuelle.

| X_{RV} | s | r | B |
|---|---|---|---|
| 0 | 1 | 0 | 0 |
| 1 | 0 | 0 | 0 |
| 2 | 1 | 1 | 1 |
| 3 | 0 | 1 | 1 |
| 4 | 1 | 0 | 1 |
| 5 | 1 | 0 | 2 |
| 6 | 1 | 0 | 3 |
| 7 | 1 | 1 | 0 |

Il est important de noter que les valeurs de X_{RV} ne croissent pas forcément avec leur position au sein de leur séquence. Ce qui est important c'est que l'ordonnancement des valeurs de X_{RV} corresponde à une alternance de valeurs de s égales à 1 et 0.

Il est également important de noter que dans le cas de la modulation 16QAM, les valeurs de X_{RV} correspondant à une valeur de s égale à 1 ne sont plus uniquement paires (voir le tableau ci-dessus). Il en résulte que les séquences alternant la valeur 0 et la valeur 1 pour la variable s ne sont plus des séquences alternant la parité de X_{RV}.

Par exemple, une séquence peut être définie par la suite de valeurs croissantes {0,1,2,3,4,1,6,3}, qui est une suite alternée de valeurs paire et impaire, mais elle peut également être définie par la suite de valeurs désordonnées {0,1,2,3,4,1,5,3}, ou par la suite de valeurs désordonnées {0,3,5,1}, ou encore par la suite de valeurs désordonnées {0,3,6,1}, ou encore par la suite de valeurs désordonnées {5,3,7,1}, ou encore par la suite de valeurs désordonnées {6,3,7,1}. Dans ces différents exemples purement illustratifs, les valeurs de X_{RV} des séquences correspondent aux triplets de valeurs (s,r,b) définis dans le tableau précédent.

Il est important de noter que le dispositif de gestion D dispose préférentiellement d'une mémoire M dans laquelle sont stockées les différentes valeurs de X_{RV}, lesquelles permettent de constituer les séquences. Cette mémoire M peut également stocker les définitions des séquences. Ainsi, lorsque le dispositif D doit intervenir, son module de traitement MT n'a plus qu'à extraire de la mémoire M les valeurs de X_{RV} afin de les transmettre au second étage d'organisation de débit SRM, ainsi qu'éventuellement au module de réarrangement de bits MRB. Les valeurs et/ou les définitions des séquences peuvent être stockées dans la mémoire M soit de façon fixe, soit de façon momentanée. En d'autres termes, on peut envisager de changer dynamiquement le contenu de la mémoire M, par exemple au moyen d'un terminal local, ou du contrôleur de réseau radio RNC auquel est raccordée la station de base (Node B) dans laquelle est implanté le système de codage de canal de transport SCCT, ou encore de l'OMC. Il est également possible d'implanter le dispositif de gestion D selon l'invention dans un contrôleur de réseau radio RNC afin de fournir à au moins une station de base du réseau des séquences de valeurs de paramètre de redondance X_{RV}.

Le dispositif de traitement D selon l'invention, et notamment son module de traitement PM, peut être par exemple réalisé sous la forme de circuits électroniques, de modules logiciels (ou informatiques), ou d'une combinaison de circuits et de logiciels. Il en va de même du système d'organisation de débit SOD et du système de codage de canal de transport SCCT.

L'invention peut être également vue comme un procédé de gestion de transmission de blocs de données numériques dans un canal de transport descendant de type HS-DSCH établi entre un réseau de communications et un équipement d'utilisateur UE, consistant, en cas de réception incorrecte par l'équipement d'utilisateur UE d'un bloc comportant un premier jeu de données numériques choisi en fonction d'une valeur d'un paramètre de redondance X_{RV}, par exemple défini par au moins les première s et deuxième r variables, à transmettre à cet équipement UE au moins un autre bloc comportant un autre jeu de données numériques choisi en fonction d'une autre valeur du paramètre de redondance.

Ce procédé peut être notamment mis en oeuvre à l'aide du dispositif de gestion D, du système d'organisation de débit SOD et du système de codage de canal de transport SCCT présentés ci-avant. Les fonctions et sous-fonctions principales et optionnelles assurées par ce procédé étant sensiblement identiques à celles assurées par les différents moyens constituant le dispositif de gestion D et/ou le système d'organisation de débit SOD et/ou le système de codage de canal de transport SCCT, seules seront résumées ci-après les étapes mettant en oeuvre les fonctions principales du procédé selon l'invention.

Ce procédé se caractérise par le fait qu'à chaque fois que doit être transmis un bloc donné, on utilise des valeurs successives de paramètre de redondance X_{RV} conformément à une séquence choisie dans laquelle la valeur du paramètre de redondance X_{RV} utilisée pour chaque première transmission de bloc correspond à une transmission prioritaire de bits systématiques.

Par ailleurs, il est préférable de choisir les valeurs successives de paramètre de redondance X_{RV} conformément à une séquence choisie dans laquelle la valeur du paramètre de redondance X_{RV}, qui est utilisée pour chaque transmission de bloc postérieure à la première transmission, correspond à une alternance de transmission prioritaire de bits de parité 1 ou 2 et de transmission de bits systématiques.

Grâce à l'invention, il est possible de réduire notablement la puissance nécessaire à l'obtention d'un débit de bits donné. Ainsi, on peut par exemple réduire la puissance d'un facteur sensiblement égal à 3,5 après trois transmissions de bloc.

L'invention ne se limite pas aux modes de réalisation de dispositif de gestion, de système d'organisation de débit, de système de codage de canal de transport, et de procédé de gestion décrits ci-avant, seulement à titre d'exemple, mais elle englobe toutes les variantes que pourra envisager l'homme de l'art dans le cadre des revendications ci-après.

Dans la description qui précède, il a été décrit, en référence aux figures 2 et 4, un exemple de réalisation dans lequel le dispositif de gestion selon l'invention est implanté dans le système de codage de canal de transport afin d'alimenter en valeurs de X_{RV} son système d'organisation de débit et son module de réarrangement de bits (MRB), par exemple en présence d'une modulation de type 16QAM. Mais, le dispositif de gestion selon l'invention peut être également implanté dans le système d'organisation de débit dans le cas d'une modulation de type 16QAM. Il peut être également implanté dans la station de base dans laquelle est implanté le système de codage de canal de transport ou dans un contrôleur de réseau radio couplé à cette station de base.

## Revendications

1. Dispositif (D) de gestion de transmission de blocs de données numériques dans un canal de transport descendant de type HS-DSCH établi entre une station de base (Node B) d'un réseau de communications et un équipement d'utilisateur (UE), lesdites données numériques pouvant être d'un type dit « systématique » et/ou d'un type dit « à parité 1 ou 2 », et ledit dispositif (D) comprenant des moyens de traitement (MT) agencés pour choisir une valeur d'un paramètre de redondance X_{RV} en vue de la transmission d'un bloc audit équipement (UE) comportant un premier jeu de données numériques choisi en fonction de ladite valeur, et en cas de réception incorrecte d'un bloc par ledit équipement (UE) pour choisir au moins une autre valeur dudit paramètre de redondance, en vue de la transmission audit équipement (UE) d'au moins un autre bloc comportant un autre jeu de données numériques choisi en fonction de ladite autre valeur, **caractérisé en ce que** lesdits moyens de traitement (MT) sont en outre agencés, chaque fois qu'un bloc donné doit être transmis dans ledit canal, pour choisir des valeurs successives de paramètre de redondance X_{RV} conformément à une séquence choisie dans laquelle la valeur du paramètre de redondance X_{RV} utilisée pour la première transmission de bloc est choisie de manière à rendre prioritaire la transmission de bits systématiques.

2. Dispositif selon la revendication 1, **caractérisé en ce que** lesdits moyens de traitement (MT) sont agencés pour choisir lesdites valeurs successives de paramètre de redondance X_{RV} conformément à une séquence choisie dans laquelle la valeur du paramètre de redondance X_{RV} utilisée pour chaque transmission de bloc postérieure à la première transmission est choisie de manière à rendre prioritaire alternativement la transmission de bits de parité 1 ou 2 et la transmission de bits systématiques.

3. Dispositif selon l'une des revendications 1 et 2, **caractérisé en ce que** lesdits moyens de traitement (MT) sont agencés pour choisir lesdites valeurs successives de paramètre de redondance X_{RV} conformément à une séquence choisie dans laquelle chaque valeur du paramètre de redondance X_{RV} est choisie de manière à permettre une alternance de mise en correspondance bits/symboles lors de chaque transmission.

4. Dispositif selon l'une des revendications 1 à 3, **caractérisé en ce que**, ledit paramètre de redondance X_{RV} étant défini par au moins une première (s) et une deuxième (r) variables, lesdits moyens de traitement (MT) sont agencés, en présence d'une transmission utilisant une modulation de type « QPSK », dans laquelle la première variable (s) peut prendre deux valeurs choisies parmi 0 et 1 et la deuxième variable (r) peut prendre au moins deux valeurs choisies parmi 0, 1, 2 et 3, pour choisir chaque séquence de sorte qu'elle constitue une suite de valeurs de paramètre de redondance X_{RV} dans laquelle ladite première valeur correspondant à ladite première transmission est paire.

5. Dispositif selon la combinaison des revendications 3 et 4, **caractérisé en ce que** lesdits moyens de traitement (MT) sont agencés pour choisir chaque séquence de sorte qu'elle constitue une suite alternée de valeurs de paramètre de redondance X_{RV} paire et impaire, ladite première valeur correspondant à ladite première transmission étant paire.

6. Dispositif selon l'une des revendications 4 et 5, **caractérisé en ce que** ledit paramètre de redondance X_{RV} est défini par la relation X_{RV} = 2r +1 - s.

7. Dispositif selon l'une des revendications 4 à 6, **caractérisé en ce que** lesdits moyens de traitement (MT) sont agencés pour choisir chaque séquence de sorte qu'elle constitue une suite alternée de valeur de paramètre de redondance X_{RV} paire, correspondant à une première variable (s) égale à 1, et de valeur de paramètre de redondance X_{RV} impaire, correspondant à une première variable (s) égale à 0.

8. Dispositif selon l'une des revendications 4 à 7, **caractérisé en ce que** lesdits moyens de traitement (MT) sont agencés pour choisir chaque séquence de sorte qu'elle constitue une suite de valeurs de paramètre de redondance X_{RV} dans laquelle la valeur de la deuxième variable (r) varie à chaque valeur de X_{RV}.

9. Dispositif selon l'une des revendications 4 à 8, **caractérisé en ce que** lesdits moyens de traitement (MT) sont agencés pour choisir chaque séquence de sorte qu'elle constitue une suite de valeurs de paramètre de redondance X_{RV} dans laquelle la valeur de la deuxième variable (r) varie toutes les deux valeurs de X_{RV}.

10. Dispositif selon l'une des revendications 4 à 9, **caractérisé en ce que** lesdits moyens de traitement (MT) sont agencés pour constituer chaque séquence sous la forme d'une suite de valeurs de redondance X_{RV} choisie parmi au moins une fraction des suites {0,1,2,3,4,5,6,7}, {0,1,2,3}, et {2,1,0,3,4}, lesdites valeurs 0, 1, 2, 3, 4, 5, 6 et 7 correspondant respectivement à des couples de première et deuxième variables (s,r) de valeurs (1,0), (0,0), (1,1), (0,1), (1,2), (0,2), (1,3) et (0,3).

11. Dispositif selon l'une des revendications 1 à 3, **caractérisé en ce que** lesdits moyens de traitement (MT) sont agencés, en présence d'une transmission utilisant une modulation de type « 16QAM », dans laquelle ledit paramètre de redondance X_{RV} est défini par des première (s), deuxième (r) et troisième variables, la première variable (s) pouvant prendre deux valeurs choisies parmi 0 et 1, la deuxième variable (r) pouvant prendre au moins deux valeurs choisies parmi 0 et 1, et la troisième variable étant destinée à définir une mise en correspondance bits/symboles, pour choisir chaque séquence de sorte qu'elle constitue une suite de valeurs de paramètre de redondance X_{RV} dans laquelle la valeur de la deuxième variable (r) varie à chaque valeur de X_{RV}, au moins lors des deux premières transmissions.

12. Dispositif selon l'une des revendications 1 à 3, **caractérisé en ce que** lesdits moyens de traitement (MT) sont agencés, en présence d'une transmission utilisant une modulation de type « 16QAM », dans laquelle ledit paramètre de redondance X_{RV} est défini par des première (s), deuxième (r) et troisième variables, la première variable (s) pouvant prendre deux valeurs choisies parmi 0 et 1, la deuxième variable (r) pouvant prendre au moins deux valeurs choisies parmi 0 et 1, et la troisième variable étant destinée à définir une mise en correspondance bits/symboles, pour choisir chaque séquence de sorte qu'elle constitue une suite de valeurs de paramètre de redondance X_{RV} dans laquelle la valeur de la deuxième variable (r) varie toutes les deux valeurs de X_{RV}, au moins lors des quatre premières transmissions.

13. Dispositif selon l'une des revendications 1 à 3, 11 et 12, **caractérisé en ce que** lesdits moyens de traitement (MT) sont agencés, en présence d'une transmission utilisant une modulation de type « 16QAM », dans laquelle ledit paramètre de redondance X_{RV} est défini par des première (s), deuxième (r) et troisième variables, la première variable (s) pouvant prendre deux valeurs choisies parmi 0 et 1, la deuxième variable (r) pouvant prendre au moins deux valeurs choisies parmi 0 et 1, et la troisième variable étant destinée à définir une mise en correspondance bitsisymboles, pour choisir chaque séquence de sorte qu'elle constitue une suite de valeurs de paramètre de redondance X_{RV} dans laquelle la valeur de la troisième variable varie à chaque valeur de X_{RV}, au moins lors des deux premières transmissions.

14. Dispositif selon l'une des revendications 1 à 3, 11 et 12, **caractérisé en ce que** lesdits moyens de traitement (MT) sont agencés, en présence d'une transmission utilisant une modulation de type « 16QAM », dans laquelle ledit paramètre de redondance X_{RV} est défini par des première (s), deuxième (r) et troisième variables, la première variable (s) pouvant prendre deux valeurs choisies parmi 0 et 1, la deuxième variable (r) pouvant prendre au moins deux valeurs choisies parmi 0 et 1, et la troisième variable étant destinée à définir une mise en correspondance bits/symboles, pour choisir chaque séquence de sorte qu'elle constitue une suite de valeurs de paramètre de redondance X_{RV} dans laquelle la valeur de la troisième variable varie toutes les deux valeurs de X_{RV}.

15. Dispositif selon l'une des revendications 11 à 14, **caractérisé en ce que** lesdits moyens de traitement (MT) sont agencés pour choisir chaque séquence de sorte qu'elle constitue une suite alternée de valeurs de paramètre de redondance X_{RV} dans laquelle ladite première variable (s) est soit égale à 1, soit égale à 0.

16. Dispositif selon l'une des revendications 11 à 15, **caractérisé en ce que** lesdits moyens de traitement (MT) sont agencés pour choisir chaque séquence de sorte qu'elle constitue une suite de valeurs de paramètre de redondance X_{RV} dans laquelle les valeurs des deuxième (r) et troisième variables varient simultanément à chaque valeur de X_{RV}.

17. Dispositif selon l'une des revendications 11, 13, 15 et 16, **caractérisé en ce que** lesdits moyens de traitement (MT) sont agencés pour choisir chaque séquence de sorte qu'elle constitue une suite de valeurs de paramètre de redondance X_{RV} dans laquelle les valeurs des deuxième (r) et troisième variables varient de façon alternée d'une valeur de X_{RV} à l'autre.

18. Dispositif selon l'une des revendications 11 à 17, **caractérisé en ce que** lesdits moyens de traitement (MT) sont agencés pour constituer chaque séquence sous la forme d'une suite de valeurs de redondance X_{RV} choisie parmi au moins une fraction des suites {0,3,5,1,2}, {0,3,5,1,4}, {0,3,5,1,6}, {0,3,5,1,7}, {0,3,6,1,2}, {0,3,6,1,4}, {0,3,6,1,5}, {0,3,6,1,7}, {6,3,7,1,0}, {6,3,7,1,2}, {6,3,7,1,4}, {6,3,7,1,5}, lesdites valeurs 0, 1, 2, 3, 4, 5, 6 et 7 correspondant respectivement à des triplets de première, deuxième et troisième variables de valeurs (1,0,0), (0,0,0), (1,1,1), (0,1,1), (1,0,1), (1,0,2), (1,0,3) et (1,1,0).

19. Dispositif selon l'une des revendications 1 à 18, **caractérisé en ce que** lesdits moyens de traitement (MT) sont agencés pour utiliser de façon cyclique ladite séquence choisie.

20. Système de codage de canal de transport (SCCT) pour une station de base (Node B) d'un réseau de communications mobile, **caractérisé en ce qu'**il comprend au moins un dispositif de gestion (D) selon l'une des revendications précédentes.

21. Système d'organisation de débit (SOD) pour un système de codage de canal de transport (SCCT) d'une station de base (Node B) d'un réseau de communications mobile, **caractérisé en ce qu'**il comprend au moins un dispositif de gestion (D) selon l'une des revendications 1 à 19.

22. Station de base (Node B) pour un réseau de communications mobile, **caractérisé en ce qu'**elle comprend au moins un dispositif de gestion (D) selon l'une des revendications 1 à 19.

23. Contrôleur de réseau radio pour un réseau de communications mobile, **caractérisé en ce qu'**il comprend au moins un dispositif de gestion (D) selon l'une des revendications 1 à 19, propre à fournir à au moins une station de base (Node B) dudit réseau des séquences de valeurs de paramètre de redondance X_{RV}.

24. Procédé de gestion de transmission de blocs de données numériques sur un canal de transport descendant de type HS-DSCH établi entre un réseau de communications et un équipement d'utilisateur (UE), lesdites données numériques pouvant être d'un type dit « systématique » et/ou d'un type dit « à parité 1 ou 2 », et ledit procédé consistant, en cas de réception incorrecte par ledit équipement d'utilisateur (UE) d'un bloc comportant un premier jeu de données numériques choisi en fonction d'une valeur d'un paramètre de redondance X_{RV}, à transmettre à cet équipement (UE) au moins un autre bloc comportant un autre jeu de données numériques choisi en fonction d'une autre valeur dudit paramètre de redondance, **caractérisé en ce que**, pour un bloc donné à transmettre, on utilise des valeurs successives de paramètre de redondance X_{RV} conformément à une séquence choisie dans laquelle la valeur du paramètre de redondance X_{RV} utilisée pour chaque première transmission de bloc correspond à une transmission prioritaire de bits systématiques.

25. Procédé selon la revendication 24, **caractérisé en ce que** l'on choisit lesdites valeurs successives de paramètre de redondance X_{RV} conformément à une séquence choisie dans laquelle la valeur du paramètre de redondance X_{RV} utilisée pour chaque transmission de bloc postérieure à la première transmission correspond à une alternance de transmission prioritaire de bits de parité 1 ou 2 et de transmission prioritaire de bits systématiques.
